# FASCICULE DE BREVET EUROPEEN

(11) **EP 3 692 324 B1**
(45) Date de publication et mention de la délivrance du brevet: **04.05.2022**
(21) Numéro de dépôt: 18789328.4
(22) Date de dépôt: 28.09.2018
(51) Int. Cl.: F42B 10/14

(54) **DISPOSITIF DE BLOCAGE D'AILETTE ET PROJECTILE COMPORTANT UN TEL DISPOSITIF**
FLÜGELSPERRVORRICHTUNG UND GESCHOSS MIT EINER SOLCHEN VORRICHTUNG
FIN BLOCKING DEVICE AND PROJECTILE HAVING SUCH A DEVICE

(30) Priorité: 04.10.2017 FR 1701026
(43) Date de publication de la demande: 12.08.2020
(73) Titulaire: Nexter Munitions, 78034 Versailles Cedex (FR)
(72) Inventeur: ROY, Richard, 18023 Bourges (FR); PINOTEAU, Sylvain, 18023 Bourges (FR)
(74) Mandataire: Cabinet Chaillot
(86) Numéro de dépôt international: PCT/EP2018/076537
(87) Numéro de publication internationale: WO 2019/068591

(56) Documents cités:
- FR-A1- 3 037 390
- US-A- 4 143 838
- US-A- 4 143 838

## Description

Le domaine technique de l'invention est celui des dispositifs de blocage d'ailettes de projectile et des projectiles comportant des ailettes blocables par de tels dispositifs.

Afin de stabiliser un projectile sur sa trajectoire et pour augmenter sa portée, il est connu de lui adjoindre des ailettes régulièrement réparties sur son pourtour.

Pour ne pas interférer avec des moyens de lancement du projectile, les ailettes sont, au départ du projectile, dans une position rentrée. Les ailettes sont ensuite dépliées, c'est-à-dire mises dans une position où elles s'étendent radialement vis-à-vis de l'axe longitudinal du projectile.

Afin d'empêcher que l'ailette ne se replie suite à un rebond lors de son déploiement, il est connu du brevet FR2895071 un dispositif de blocage empêchant le repli d'une ailette grâce à une lame en contact avec un pied de l'ailette. La lame fléchit lorsque l'ailette se déplie et s'arc-boute pour bloquer l'ailette si celle-ci tente de se replier.

Il s'avère qu'un tel dispositif n'est pas adapté à toutes les configurations de déploiement d'ailettes, notamment lorsque l'ailette a un axe de pivotement de son pied d'ailette qui est parallèle à l'axe longitudinal du projectile, mais surtout l'arc-boutement n'est pas toujours obtenu de manière parfaite et rapide ce qui occasionne parfois un repli partiel de l'ailette.

On connaît également par le brevet US4143838 un dispositif de blocage d'ailette d'un projectile comportant une bille contenue dans une cavité d'ailette lorsque l'ailette est repliée. La bille est poussée en partie, lorsque l'ailette est dépliée, dans un sillon du projectile.

Cependant la poussée radiale de la bille assurée par un ressort ne permet pas de garantir un verrouillage rigide de l'ailette en position déployée. En effet, les jeux fonctionnels nécessaires à ce dispositif conduisent à une possibilité d'oscillation de l'ailette en position déployée, ce qui est une source d'instabilité de la position déployée et peut conduire à un rebond de l'ailette.

On connaît également par le brevet FR3037390 un dispositif de blocage d'ailette d'un projectile comportant une masselotte apte à maintenir l'ailette repliée lors de l'accélération longitudinale du projectile et apte à glisser sous un pied de l'ailette lors du vol du projectile. Ce dispositif est complexe et nécessite la présence d'une masselotte inertielle, écartée lors du tir, et pouvant revenir pour assurer le blocage. On notera par ailleurs qu'un défaut de retour de la masselotte conduit à l'absence de blocage des ailettes.

L'invention propose de résoudre ce problème de fiabilité et de solidité du blocage. De plus, l'invention permet d'assurer le blocage d'ailettes pivotantes, soit autour d'un axe parallèle au projectile, soit autour d'un axe perpendiculaire au projectile.

Ainsi, l'invention porte sur un projectile comportant un corps de projectile et plusieurs ailettes réparties régulièrement autour du projectile, projectile comportant au niveau de chaque ailette au moins un dispositif de blocage d'une ailette du projectile, ailette comportant un pied d'ailette pivotant autour d'un axe solidaire du corps du projectile entre une position d'ailette rentrée et une position d'ailette sortie, le projectile comportant au moins un évidement abritant au moins une forme de révolution poussée par un moyen élastique entre une première surface portée par l'ailette et une deuxième surface portée par le corps du projectile, au moins une des deux surfaces formant une rampe qui converge vers l'autre surface pour tendre à provoquer un coincement de la forme de révolution entre les deux surfaces, projectile caractérisé en ce que le moyen élastique assure un contact permanent de la forme de révolution avec la rampe et l'autre surface par poussée de la forme de révolution à la fois contre la rampe et l'autre surface.

Avantageusement, l'axe du pied d'ailette est parallèle à l'axe longitudinal du projectile, le pied d'ailette comportant un profil au moins partiellement circulaire et situé dans un logement du corps en correspondance de forme avec le pied d'ailette de manière à permettre le pivotement d'une surface externe du pied d'ailette relativement à une surface interne du logement.

Avantageusement, la forme de révolution comporte un rouleau et le moyen élastique comporte un ressort à lame ondulée placé le long du rouleau.

Avantageusement, l'axe du pied d'ailette est perpendiculaire à l'axe longitudinal du projectile.

Avantageusement, la forme de révolution comporte une bille et le moyen élastique comporte une lame de ressort en appui sur la bille.

Avantageusement, l'évidement est pratiqué dans le pied d'ailette et comporte la première surface qui forme rampe.

Avantageusement, l'évidement est pratiqué dans le corps de projectile et comporte la deuxième surface qui forme rampe.

Avantageusement, le dispositif comporte une pluralité d'évidements.

L'invention sera mieux comprise à la lecture de la description suivante, description faite en regard des dessins figurant en annexe, dessins dans lesquels :
La figure la représente une vue partielle de trois quarts d'un projectile comportant un dispositif selon l'invention avec des ailettes en position rentrée.
La figure 1b représente une vue partielle de trois quarts d'un projectile comportant un dispositif selon l'invention avec des ailettes en position sortie.
La figure 2 représente une vue partielle en coupe d'un dispositif selon un premier mode de réalisation de l'invention en position intermédiaire.
La figure 3 représente une vue schématique de détail d'un dispositif selon l'invention bloquant une ailette.
La figure 4 représente une vue de détail d'un dispositif selon un second mode de réalisation de l'invention en position intermédiaire.
La figure 5a représente une vue partielle de trois quarts d'un projectile comportant un dispositif selon un troisième mode de réalisation de l'invention avec des ailettes en position rentrée.
La figure 5b représente une vue partielle de trois quarts d'un projectile comportant un dispositif selon un troisième mode de réalisation de l'invention avec des ailettes en position sortie.
La figure 6 représente une vue de détail en coupe d'un dispositif selon un troisième mode de réalisation de l'invention en position sortie.

Selon la figure la l'arrière d'un projectile 100 (projectile 100 symbolisé par des pointillés) comporte un corps 2 sensiblement annulaire qui comporte des ailettes 3 régulièrement réparties tout autour du corps 2, dans une position dite rentrée où chaque ailette 3 est repliée sur le corps 2. Dans cette position les ailettes ne sont pas exposées et permettent de tirer le projectile sans risque d'interférence avec un élément externe au projectile.

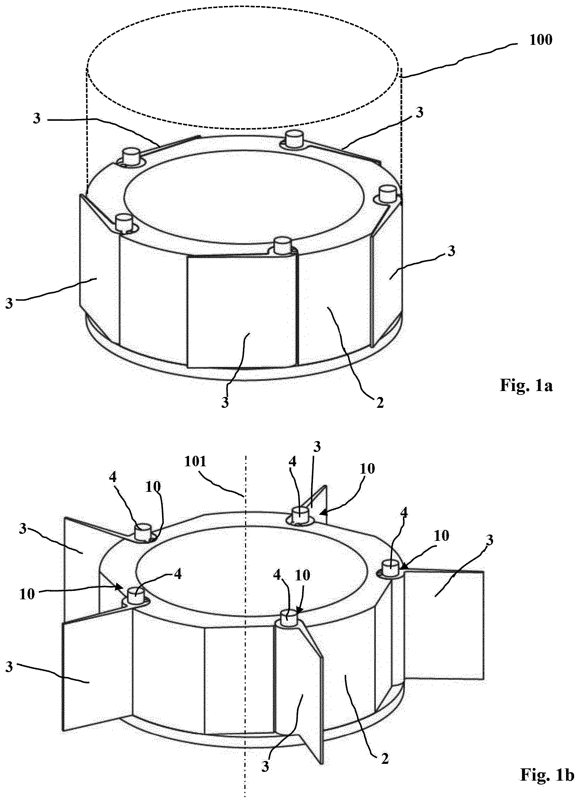

Selon la figure 1b, les ailettes 3 sont pivotées dans une position dite sortie où les ailettes 3 s'étendent radialement par rapport à l'axe longitudinal 101 du projectile 100. On notera que chaque ailette 3 est pivotante autour d'un axe 4 solidaire du corps 1, axe de pivotement 4 parallèle à l'axe longitudinal 101 du projectile 100. Dans la position sortie, les ailettes 3 exercent leur pleine portance optimisant la portée et la stabilité du projectile 100. Le projectile 100 comporte au niveau de chaque ailette 3 un dispositif de blocage 10 laissant chaque ailette 3 libre de pivoter de la position rentrée à la position sortie et empêchant le repli de chaque ailette vers la position rentrée comme nous allons le voir plus loin. Les moyens assurant le pivotement de chaque ailette 3 ne sont pas l'objet de l'invention et ne sont donc pas décrits. Ces moyens peuvent comprendre : des moyens moteurs, des ressorts ou bien une mise en œuvre de la force centrifuge exercée sur chaque ailette 3 par la rotation du projectile 100 ou encore par des effets aérodynamiques au niveau de chaque ailette 3.

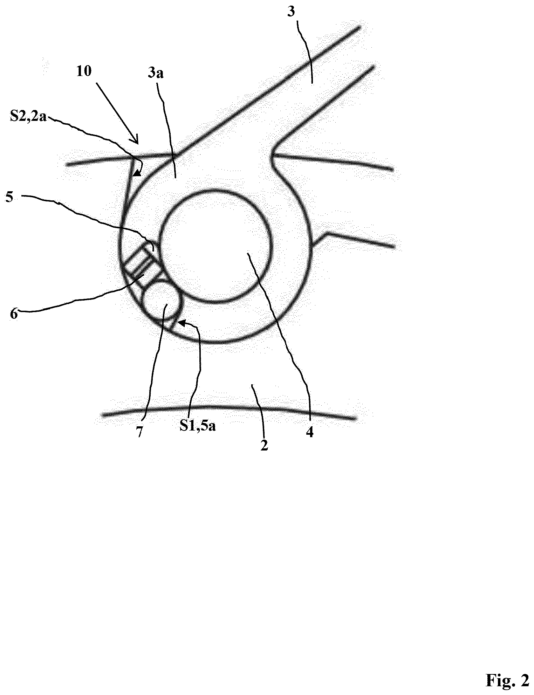

Selon la figure 2, l'ailette 3 comporte un pied d'ailette 3a de profil partiellement circulaire placé dans un logement 2a du corps 2, logement 2a en correspondance de forme avec le pied d'ailette 3a de manière à permettre le pivotement d'une surface externe du pied d'ailette 3a relativement à une surface interne du logement 2a lors du déploiement de l'ailette 3.

Selon le mode de réalisation illustré, le pied d'ailette 3a comporte un évidement 5 qui s'étend longitudinalement parallèlement à l'axe 4 de pivotement de l'ailette 3, et donc parallèlement à l'axe du projectile (axe du projectile visible à la figure 1b). Le logement 5 est occupé par un moyen élastique 6 qui pousse une forme de révolution 7. En l'espèce, le moyen élastique 6 comporte une lame ressort ondulée 6 et la forme de révolution comporte un rouleau cylindrique 7. Le rouleau 7 est poussé par la lame ressort 6 vers une première surface S1 de l'ailette qui est portée par l'évidement 5 et qui forme une rampe 5a convergeant vers une deuxième surface S2 qui ici est la surface interne du logement 2a. On rappelle que le ressort 6 assure un contact permanent de la forme de révolution (rouleau) 7 avec la rampe 5a (première surface S1) et la surface interne S2 du logement 2a (deuxième surface S2).

Lors d'un déploiement de l'ailette 3, le pied d'ailette 3a pousse le ressort 6 qui pousse à son tour le rouleau 7 qui tourne alors sur lui-même dans l'évidement 5 ou glisse sur la surface S2 du logement 2a. L'ailette est libre de pivoter vers la position sortie.

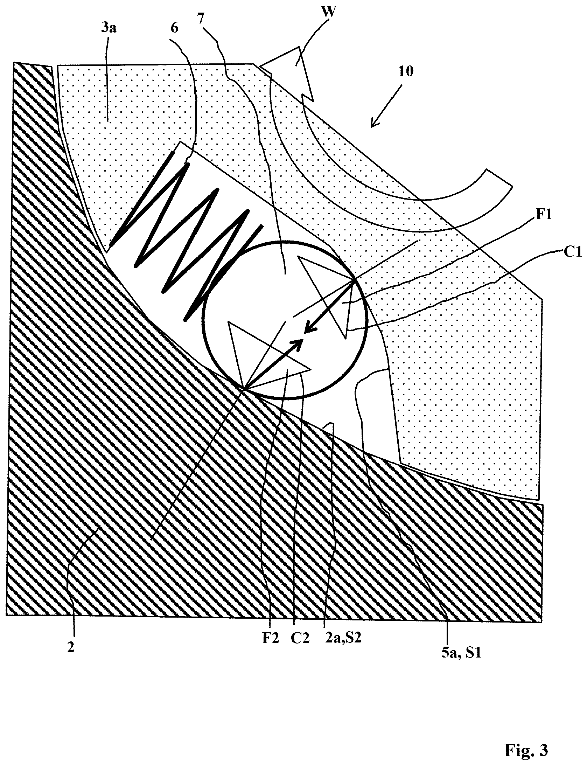

A l'inverse, tel que détaillé à la figure 3, l'application d'un couple W tendant à faire pivoter l'ailette 3 vers la position fermée ou repliée, applique un effort F1 de la rampe 5a sur le rouleau 7, effort F1 équilibré par un effort F2 appliqué au rouleau 7 par la surface interne S2 du logement 2a, aboutissant à un coincement du rouleau (forme de révolution 7) entre la rampe 5a (première surface S1) et la surface interne S2 du logement 2a, ce qui bloque le pivotement de l'ailette 3 dans le sens de la position rentrée.

Pour obtenir le blocage sans glissement, l'Homme du Métier prendra soin de choisir des matériaux pour le rouleau 7, la rampe 5a et le logement 2a et des angles entre les normales aux points d'application des efforts F1 et F2 tels que ces deux efforts F1 et F2 s'appliquent dans les cônes de frottement respectifs c1 et c2 de ces deux efforts.

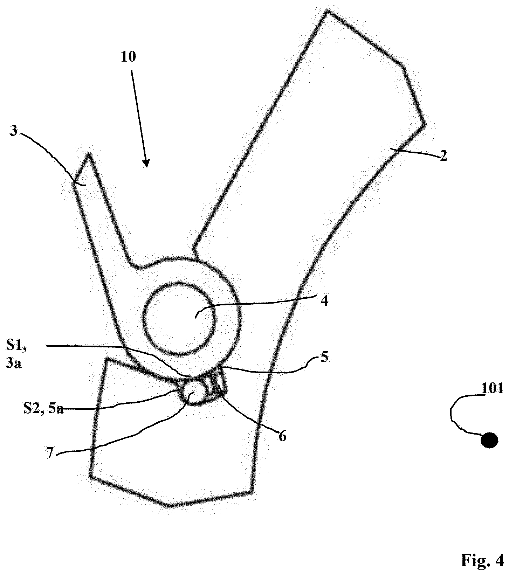

Selon la figure 4, un évidement 5 contenant le rouleau 7 (ou forme de révolution) et le ressort 6 est pratiqué dans le logement 2a. Dans ce cas la première surface S1 est constituée par la surface cylindrique 3a du pied de l'ailette 3 et la deuxième surface S2 est portée par le corps 2 de projectile et est constituée par la rampe 5a de l'évidement 5. Le coincement se fera dans ce cas entre la rampe 5a et la surface 3a du pied d'ailette qui est pivotante relativement à la rampe.

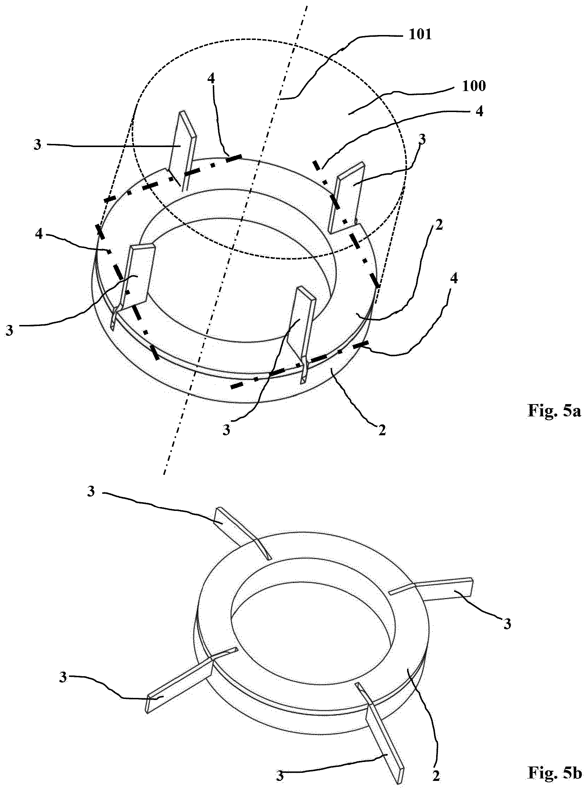

Selon la figure 5a, le projectile 100 représenté en pointillés comporte des ailettes 3 dont le déploiement se fait autour d'axes 4 de pivotement perpendiculaires à l'axe longitudinal 101 du projectile 100 de telle manière que lorsque les ailettes sont en position rentrée, elles sont situées à l'intérieur du projectile 100 comme à la figure 5a et s'étendent radialement comme à la figure 5b lorsqu'elles sont en position sortie.

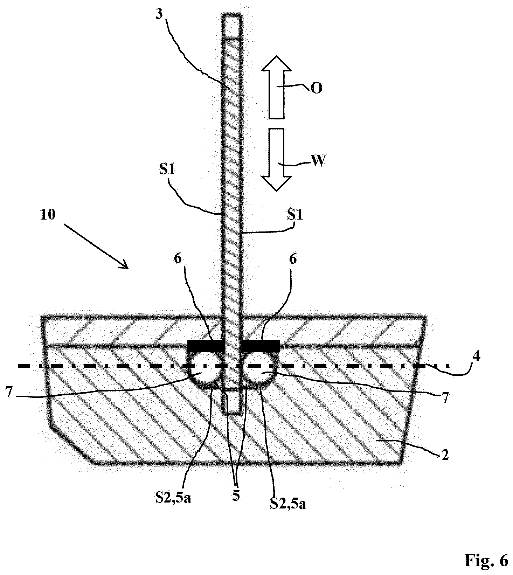

Selon la figure 6, le projectile 100 comporte pour chaque ailette 3 et au niveau de chaque face du pied d'ailette 3 un dispositif de blocage 10 comportant un évidement 5 contenant une forme de révolution 7, en l'espèce une bille 7, poussée par un ressort 6 vers une rampe 5a convergeant vers la surface latérale du pied d'ailette 3. Dans ce cas, la première surface S1 est formée par la face latérale de l'ailette 3 et la deuxième surface S2 est portée par l'évidement 5 aménagé dans le corps 2. Le moyen élastique 6 assure là encore un contact permanent de la bille 7 avec la rampe 5a d'une part et avec la première surface S1 portée par l'ailette d'autre part. Selon ce mode de réalisation, il y a deux dispositifs de blocage, un de chaque côté de l'ailette 3.

Lorsqu'un couple O tend à faire pivoter l'ailette 3 vers la position ouverte, la bille 7 est entrainée par friction contre la face du pied d'ailette 3 et comprime le ressort 6 ce qui permet une libre ouverture de l'ailette 3. A l'inverse, lorsqu'un couple W tend à faire pivoter l'ailette 3 vers sa position fermée, la bille 7 qui est plaquée vers la rampe 5a par le ressort 6, est entrainée aussi par friction contre le pied d'ailette 3 en direction de la rampe 5a ce qui aboutit au coincement de l'ailette selon les conditions d'équilibre des forces expliquées au mode de réalisation précédent.

Ainsi l'invention permet de résoudre ce problème de fiabilité et de consistance du blocage et permet aussi d'assurer le blocage d'ailettes pivotantes soit autour d'un axe parallèle au projectile, soit autour d'un axe perpendiculaire au projectile.

## Revendications

1. Projectile (100) comportant un corps (2) de projectile (100) et plusieurs ailettes (3) réparties régulièrement autour du projectile (100), projectile (100) comportant au niveau de chaque ailette (3) au moins un dispositif de blocage (10) d'une ailette (3) du projectile (100), ailette (3) comportant un pied (3a) d'ailette pivotant autour d'un axe (4) solidaire du corps (2) du projectile (100) entre une position d'ailette rentrée et une position d'ailette sortie, le projectile (100) comportant au moins un évidement (5) abritant au moins une forme de révolution (7) poussée par un moyen élastique (6) entre une première surface (S1) portée par l'ailette (3) et une deuxième surface (S2) portée par le corps du projectile (2), au moins une des deux surfaces (S1,S2) formant une rampe (5a) qui converge vers l'autre surface pour tendre à provoquer un coincement de la forme de révolution (7) entre les deux surfaces, projectile (100) **caractérisé en ce que** le moyen élastique (6) assure un contact permanent de la forme de révolution (7) avec la rampe (5a) et l'autre surface (S1,S2) par poussée de la forme de révolution (7) à la fois contre la rampe (5a) et l'autre surface (S1,S2).

2. Projectile (100) selon la revendication 1, **caractérisé en ce que** l'axe (4) du pied d'ailette (3a) est parallèle à l'axe longitudinal (101) du projectile (100), le pied (3a) d'ailette comportant un profil au moins partiellement circulaire et situé dans un logement (2a) du corps (2) en correspondance de forme avec le pied d'ailette (3a) de manière à permettre le pivotement d'une surface externe du pied (3a) d'ailette relativement à une surface interne du logement (2a).

3. Projectile (100) selon la revendication 2, **caractérisé en ce que** la forme de révolution (7) comporte un rouleau (7) et le moyen élastique (6) comporte un ressort (6) à lame ondulée placé le long du rouleau (7).

4. Projectile (100) selon la revendication 1, **caractérisé en ce que** l'axe (4) du pied d'ailette (3a) est perpendiculaire à l'axe longitudinal (101) du projectile (100) .

5. Projectile (100) selon la revendication 4, **caractérisé en ce que** la forme de révolution (7) comporte une bille (7) et le moyen élastique (6) comporte une lame de ressort (6) en appui sur la bille (7).

6. Projectile (100) selon une des revendications 1 à 3, **caractérisé en ce que** l'évidement (5) est pratiqué dans le pied d'ailette (3a) et comporte la première surface (S1) qui forme rampe (5a).

7. Projectile (100) selon une des revendications 1 à 5, **caractérisé en ce que** l'évidement (5) est pratiqué dans le corps de projectile (2) et comporte la deuxième surface (S2) qui forme rampe (5a).

8. Projectile (100) selon l'une des revendications 1 à 7, **caractérisé en ce qu'**il comporte une pluralité d'évidements (5).

## Patentansprüche

1. - Geschoss (100), aufweisend einen Körper (2) eines Geschosses (100) und mehrere gleichmäßig um das Geschoss (100) verteilte Flügel (3), wobei das Geschoss (100) im Bereich jedes Flügels (3) mindestens eine Blockiervorrichtung (10) eines Flügels (3) des Geschosses (100) aufweist, wobei der Flügel (3) einen Flügelfuß (3a) aufweist, der um eine mit dem Körper (2) des Geschosses (100) fest verbundene Achse (4) zwischen einer eingefahrenen Flügelposition und einer ausgefahrenen Flügelposition schwenkt, wobei das Geschoss (100) mindestens eine Ausnehmung (5) aufweist, in der mindestens eine Drehform (7) untergebracht ist, die von einem elastischen Mittel (6) zwischen einer ersten, von dem Flügel (3) getragenen Fläche (S1) und einer zweiten, von dem Geschosskörper (2) getragenen Fläche (S2) gedrückt wird, wobei mindestens eine der zwei Flächen (S1, S2) eine Rampe (5a) bildet, die zu der anderen Fläche konvergiert, um darauf abzuzielen, ein Einklemmen der Drehform (7) zwischen den zwei Flächen zu verursachen, wobei das Geschoss (100) **dadurch gekennzeichnet ist, dass** das elastische Mittel (6) einen ständigen Kontakt der Drehform (7) mit der Rampe (5a) und der anderen Fläche (S1, S2) durch Drücken der Drehform (7) gleichzeitig gegen die Rampe (5a) und die andere Fläche (S1, S2) sichert.

2. - Geschoss (100) nach Anspruch 1, **dadurch gekennzeichnet, dass** die Achse (4) des Flügelfußes (3a) parallel zur Längsachse (101) des Geschosses (100) ist, wobei der Flügelfuß (3a) ein Profil aufweist, das mindestens teilweise kreisförmig ist und sich in einer Aufnahme (2a) des Körpers (2) in Formentsprechung mit dem Flügelfuß (3a) derart befindet, dass das Schwenken einer äußeren Fläche des Flügelfußes (3a) relativ zu einer inneren Fläche der Aufnahme (2a) ermöglicht wird.

3. - Geschoss (100) nach Anspruch 2, **dadurch gekennzeichnet, dass** die Drehform (7) eine Walze (7) aufweist und das elastische Mittel (6) eine gewellte Blattfeder (6) aufweist, die entlang der Walze (7) platziert ist.

4. - Geschoss (100) nach Anspruch 1, **dadurch gekennzeichnet, dass** die Achse (4) des Flügelfußes (3a) senkrecht zur Längsachse (101) des Geschosses (100) ist.

5. - Geschoss (100) nach Anspruch 4, **dadurch gekennzeichnet, dass** die Drehform (7) eine Kugel (7) aufweist und das elastische Mittel (6) ein auf der Kugel (7) abgestütztes Federblatt (6) aufweist.

6. - Geschoss (100) nach einem der Ansprüche 1 bis 3, **dadurch gekennzeichnet, dass** die Ausnehmung (5) in den Flügelfuß (3a) eingearbeitet ist und die erste Fläche (S1) aufweist, die eine Rampe (5a) bildet.

7. - Geschoss (100) nach einem der Ansprüche 1 bis 5, **dadurch gekennzeichnet, dass** die Ausnehmung (5) in den Geschosskörper (2) eingearbeitet ist und die zweite Fläche (S2) aufweist, die eine Rampe (5a) bildet.

8. - Geschoss (100) nach einem der Ansprüche 1 bis 7, **dadurch gekennzeichnet, dass** es eine Vielzahl von Ausnehmungen (5) aufweist.

## Claims

1. - Projectile (100) including a body (2) of the projectile (100) and several fins (3) evenly distributed around the projectile (100), the projectile (100) including at each fin (3) at least one device (10) for blocking a fin (3) of the projectile (100), the fin (3) including a fin base (3a) pivoting about a pivot pin (4) secured to the body (2) of the projectile (100) between a withdrawn fin position and a deployed fin position, the projectile (100) including at least one recess (5) housing at least one shape of revolution (7) pushed by a resilient means (6) between a first surface (S1) borne by the fin (3) and a second surface (S2) borne by the projectile body (2), at least one of the two surfaces (S1,S2) forming a ramp (5a) that converges toward the other surface to tend to cause jamming of the shape of revolution (7) between the two surfaces, the projectile (100) being **characterised in that** the resilient means (6) ensures constant contact of the shape of revolution (7) with the ramp (5a) and the other surface (S1,S2) by pushing the shape of revolution (7) against both the ramp (5a) and the other surface (S1,S2).

2. - The projectile (100) according to claim 1, **characterized in that** the pivot pin (4) of the fin base (3a) is parallel to the longitudinal axis (101) of the projectile (100), the fin base (3a) including an at least partially circular profile located in a housing (2a) of the body (2) with shape matching with the fin base (3a) so as to allow the pivoting of an outer surface of the fin base (3a) relative to an inner surface of the housing (2a).

3. - The projectile (100) according to claim 2, **characterised in that** the shape of revolution (7) includes a roller (7) and the resilient means (6) includes an undulating leaf spring (6) placed along the roller (7).

4. - The projectile (100) according to claim 1, **characterised in that** the pivot pin (4) of the fin base (3a) is perpendicular to the longitudinal axis (101) of the projectile (100).

5. - The projectile (100) according to claim 4, **characterised in that** the shape of revolution (7) includes a ball (7) and the resilient means (6) includes a leaf spring (6) bearing on the ball (7).

6. - The projectile (100) according to one of claims 1 to 3, **characterised in that** the recess (5) is formed in the fin base (3a) and includes the first surface (S1), which forms the ramp (5a).

7. - The projectile (100) according to one of claims 1 to 5, **characterised in that** the recess (5) is formed in the projectile body (2) and includes the second surface (S2), which forms the ramp (5a).

8. - The projectile (100) according to one of claims 1 to 7, **characterised in that** it includes a plurality of recesses (5).
